# EUROPEAN PATENT SPECIFICATION

(11) **EP 1 485 272 B1**
(45) Date of publication and mention of the grant of the patent: **21.06.2006**
(21) Application number: 03709941.3
(22) Date of filing: 25.02.2003
(51) Int. Cl.: B60R 1/02, F16H 57/08

(54) **GEAR MECHANISM FOR USE IN CONTROLLING VEHICLE REAR-VIEW MIRRORS AND MEASURING ANGULAR DEFLECTION OF AN ARTICULATED TRAILER RELATIVE TO THE TRACTOR**
GETRIEBEMECHANISMUS ZUR VERWENDUNG BEI DER STEUERUNG VON FAHRZEUGRÜCKSPIEGELN UND MESSUNG VON WINKELFÖRMIGER DURCHBIEGUNG EINES GELENK-ANHÄNGERS BEZÜGLICH DES TRAKTORS
MECANISME D'ENGRENAGES SERVANT A CONTROLER LES RETROVISEURS D'UN VEHICULE ET A MESURER LA DEVIATION ANGULAIRE D'UNE REMORQUE ARTICULEE PAR RAPPORT AU TRACTEUR DE REMORQUE

(30) Priority: 01.03.2002 GB 0204820
(43) Date of publication of application: 15.12.2004
(73) Proprietor: C-Logic Limited, Upper Boddington, Northamptonshire NN11 6DJ (GB)
(72) Inventor: STANDEN, John Paul, Northamptonshire NN11 6DJ (GB)
(74) Representative: Loven, Keith James
(86) International application number: PCT/GB2003/000781
(87) International publication number: WO 2003/074330

(56) References cited:
- EP-A- 0 627 575
- DE-A- 3 509 653
- DE-A- 19 615 007
- US-A- 4 882 943

## Description

### Field of the Invention

This invention relates to a gear mechanism for use, for example, in rotating vehicle rear-view mirrors according to the preamble of claim 1.

### Background to the Invention

The closest prior art document EP-A-0 627 575 discloses a gear mechanism having two gear sections comprising a common sun gear with two sets of planet gears engaging two ring gears of different diameter, the planet gears being mounted on a planet carrier.

### Summary of the Invention

According to the invention, there is provided a gear mechanism comprising a first sun gear driving a first set of planet gears which mesh with a first ring gear, a second set of planet gears of different diameter to the gears of the first set, the gears in the second set meshing with a second ring gear but not with the first sun gear, the first and second ring gears being located side-by-side and relatively rotatable, wherein the each planet gear in the first set of planet gears is rigidly connected to a respective one of the planet gears in the second set so as to be rotatable therewith, characterised by a second sun gear rigidly connected to the first sun gear so as to rotate therewith and located on the opposite side of the second planet gears from the first planet gears, and a third set of planet gears meshing with the second sun gear, each planet gear in the third set of planet gears being rigidly connected to a respective one of the planet gears in the second set so as to be rotatable therewith, wherein the planet gears are not carried by a planet carrier. The third planet gears in engagement with the second sun gear serve to enhance the stability of the joined planet gears of the first and second sets, in particular avoiding any tendency of each gear to rotate about a plane normal to the axis of rotation thereof.

A motor may be provided to drive the sun gear. The output shaft may pass through the mechanism if the motor is offset or may protrude from one end only. The mechanism has similarities to both planetary gearboxes and harmonic drives and provides a large reduction ratio with a very low level of friction, thereby achieving a high level of efficiency. Preferably, the sun gear comprises a an internal gear section driven by a gear on the motor.

Some previous actuator designs have utilised two internal gears of different sizes coupled with a common planet gear. The planet gear can only mate correctly with one internal gear and backlash exists in the mechanism as a result. This arrangement is only adequate if the backlash is acceptable in the target application.

This mechanism achieves minimal backlash by coupling two internal gears by a planet gear that has two gear sections, each of which correctly mates with one of the internal gears.

The difference in tooth count of the two internal gears must equal the number of planet gears fitted, or be a multiple thereof.

Backlash in the mechanism can be controlled to very tight limits. Manufacturing the parts from materials having similar expansion characteristics regarding temperature and humidity will ensure that performance is maintained during environmental changes.

The design spreads torsional loads evenly among the planet gears. It will be possible to adjust backlash by rotating opposite planet gears relative to the other two although this will decrease the number of planets sharing the load and therefore increase stress on the gear teeth.

Advantages of the mechanism of the invention include simplicity in construction, since no spindles or bearings, or indeed any mountings, are required for the planet gears, properly-meshing gears, since all the gear teeth are correctly shaped and sized for accurate engagement, ease of manufacture, and ease of sealing against ingress of water. The gear mechanism has little or no backlash and is quiet in operation. It may be used, for example, to turn a steerable rear-view mirror for an articulated vehicle or the like.

### Brief Description of the Drawings

In the drawings, which illustrate an exemplary embodiment of the of the invention:
Figure 1 is a vertical cross-sectional view through a gear mechanism according to a first aspect of the invention; and
Figure 2 is a part-sectioned perspective view of the upper part of the mechanism of Figure 1.

### Detailed Description of the Illustrated Embodiment

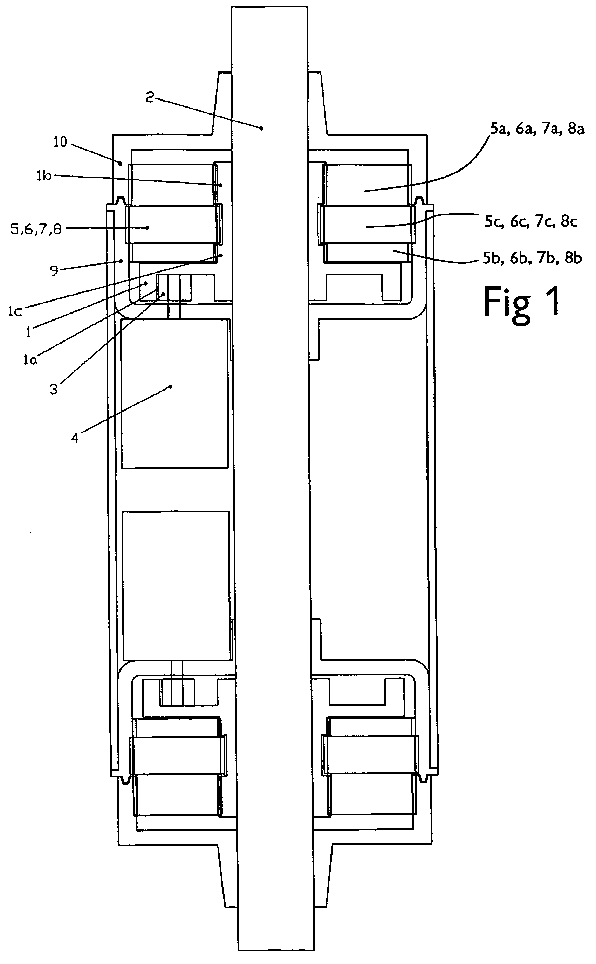

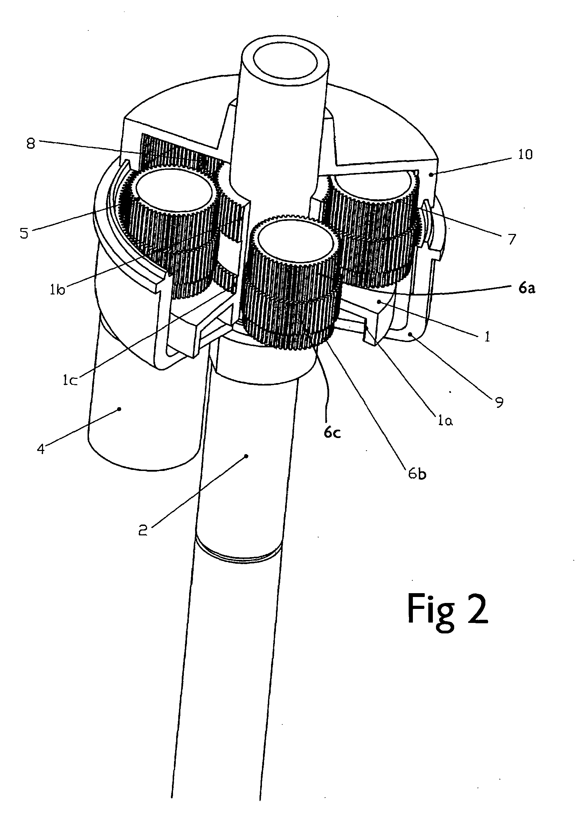

Referring to Figures 1 and 2, the gear mechanism provides a compact design that is constructed coaxially to the output shaft. A sun gear 1 has a bore which is free to rotate on the output shaft 2. It has an internal gear section 1 a which is driven by a gear 3 mounted on the shaft of a motor 4. The sun gear 1 has two other gear sections 1 b and 1c, which are geometrically part of a larger gear but divided into two regions by a groove.

Four planet gears 5, 6, 7 and 8 each incorporate two diameters of gear, with the largest gear section (5c, 6c, 7c, 8c) being approximately in the middle and dividing the smaller gear size into two sections. The planet gears are distributed evenly around the sun gear. The smaller diameter gear sections (5a-8a, 5c-8c) of the planet gears mate with the sun gear sections 1 b and 1 c. The groove in the sun gear provides clearance for the larger gear sections of the planet gears.

A stator 9 has a bore which acts as a bearing to support the output shaft 2. It has an internal gear section which engages with the larger gear sections of the planet gears. The stator also provides a means of mounting the motor 4 at the correct distance from the sun gear 1 which runs on the output shaft 2.

The output gear 10 also has a bore section which acts as a bearing against the output shaft 2. It has an internal gear section which has 4 fewer teeth than the internal gear section of the stator 9. This internal gear mates with the longer of the smaller diameter gear sections of the planet gears.

As the sun gear is rotated by the motor, the planet gears are caused to process around it as the smaller gear sections of each planet gear are engaged with the sun gear and the larger gear section of each planet gear are engaged with the stator. Each full orbit of the planet gears causes the output gear to be rotated by four teeth, this being the difference between the internal gears of the stator and output gear.

## Claims

1. A gear mechanism comprising a first sun gear (1b) driving a first set of planet gears (5a-8a) which mesh with a first ring gear (10), a second set of planet gears (5b-8b) of different diameter to the gears of the first set, the gears in the second set meshing with a second ring gear (9) but not with the first sun gear, the first and second ring gears being located side-by-side and relatively rotatable, wherein each planet gear in the first set of planet gears is rigidly connected to a respective one of the planet gears in the second set so as to be rotatable therewith, **characterised by** a second sun gear (1 c) rigidly connected to the first sun gear (1b) so as to rotate therewith and located on the opposite side of the second planet gears from the first planet gears, and a third set of planet gears (5c-8c) meshing with the second sun gear (1 c), each planet gear in the third set of planet gears being rigidly connected to a respective one of the planet gears in the second set so as to be rotatable therewith.

2. A gear mechanism according to Claim 1, comprising a motor (4) arranged to drive the sun gears (1b, 1c).

3. A gear mechanism according to Claim 2, wherein the sun gear (1) comprises an internal gear section (1a) driven by a gear on the motor.

## Patentansprüche

1. Getriebemechanismus, umfassend ein erstes Sonnenrad (1b), das eine erste Gruppe von Planetenrädern (5a - 8a) antreibt, die mit einem ersten Außenrad (10) kämmen, eine zweite Gruppe von Planetenrädern (5b - 8b), die einen anderen Durchmesser als die Zahnräder der ersten Gruppe aufweisen, wobei die Zahnräder der zweiten Gruppe mit einem zweiten Außenrad (9), jedoch nicht mit dem ersten Sonnenrad (1b) kämmen, wobei das erste Außenrad und das zweite Außenrad nebeneinander angeordnet und relativ zueinander drehbar sind, und wobei jedes Planetenrad in der ersten Gruppe von Planetenrädern starr mit einem entsprechenden Planetenrad der zweiten Gruppe verbunden ist, um mit diesem mitzudrehen, **gekennzeichnet durch** ein zweites Sonnenrad (1c), dass starr mit dem ersten Sonnenrad (1b) verbunden ist, um mit diesem mitzudrehen, und an der gegenüberliegenden Seite der zweiten Planetenräder entfernt von den ersten Planetenrädern angeordnet ist, und eine dritte Gruppe von Planetenrädern (5c - 8c), die mit dem zweiten Sonnenrad (1c) kämmen, wobei jedes Planetenrad in der dritten Gruppe von Planetenrädern starr mit einem entsprechenden Planetenrad in der zweiten Gruppe verbunden ist, um mit diesem mitzudrehen.

2. Getriebemechanismus nach Anspruch 1, umfassend einen zum Antreiben der Sonnenräder (1b, 1c) angeordneten Motor (4).

3. Getriebemechanismus nach Anspruch 2, bei dem das Sonnenrad (1) einen innenliegenden Zahnradabschnitt (1a) aufweist, der durch ein Zahnrad an dem Motor angetrieben ist.

## Revendications

1. Mécanisme d'engrenages comprenant un premier engrenage soleil (1b) entraînant un premier ensemble d'engrenages planètes (5a-8a) qui s'engrènent avec un premier engrenage à couronne dentée (10), un second ensemble d'engrenages planètes (5b-8b) de diamètre différent par rapport aux engrenages du premier ensemble, les engrenages dans le second ensemble s'engrenant avec un second engrenage à couronne dentée (9) mais non avec le premier engrenage soleil, les premier et second engrenages à couronne dentée étant situés côte à côte et étant aptes à tourner relativement, dans lequel chaque engrenage planète dans le premier ensemble d'engrenages planètes est rigidement connecté à l'un respectif des engrenages planètes dans le second ensemble de façon à être apte à tourner avec lui, **caractérisé par** un second engrenage soleil (1c) rigidement connecté au premier engrenage soleil (1b) de façon à être apte à tourner avec lui et situé sur le côté opposé des seconds engrenages planètes par rapport aux premiers engrenages planètes, et un troisième ensemble d'engrenages planètes (5c-8c) s'engrenant avec le second engrenage soleil (1c), chaque engrenage planète dans le troisième ensemble d'engrenages planètes étant rigidement connecté à l'un respectif des engrenages planètes dans le second ensemble de façon à être apte à tourner avec lui.

2. Mécanisme d'engrenages selon la revendication 1, comprenant un moteur (4) disposé pour entraîner les engrenages soleils (16, 1c).

3. Mécanisme d'engrenages selon la revendication 2, dans lequel l'engrenage soleil (1) comprend une section d'engrenage interne (1a) entraînée par un engrenage sur le moteur.
